# EUROPEAN PATENT APPLICATION

(11) **EP 4 559 942 A1**
(43) Date of publication of application: **28.05.2025**
(21) Application number: 23211410.8
(22) Date of filing: 22.11.2023
(51) Int. Cl.: C08F 10/14, C09D 129/14, C09D 145/00, C09J 123/24, C08F 16/38, C08F 34/02, C08F 210/14, C08F 216/38, C08F 234/02, C09J 129/10, C09J 145/00, C08K 5/17, C08F 2/06

(54) **CURABLE COMPOSITIONS CONTAING BUTENOLIDE-BASED COPOLYMERS**

(71) Applicant: BASF SE, 67056 Ludwigshafen am Rhein (DE)
(72) Inventor: HOEVELMANN, Claas Henrik, 48165 Münster (DE); NIEMEIER, Manuela, 48165 Münster (DE); CORTEN, Cathrin, 48165 Münster (DE); GARCIA CASTRO, Ivette, 67056 Ludwigshafen (DE); SCHAEFER, Bernd, 67056 Ludwigshafen (DE); LUCAS, Frederic, 67056 Ludwigshafen (DE); SCHAEFER, Christian Gerhard, 67056 Ludwigshafen (DE); LAERBUSCH, Marlen, 48165 Münster (DE); LICHT, Ulrike, 67056 Ludwigshafen (DE); SCHUMACHER, Karl-Heinz, 67433 Neustadt (DE)
(74) Representative: Steffan & Kiehne Patentanwälte PartG mbB

(57) **Abstract**

The invention relates to a curable composition comprising one or more copolymer A formed by copolymerization of a monomer mixture, the monomer mixture comprising one or more monomers from the class of butenolides, and one or more vinyl functional monomers; and one or more polyamine substances B, the polyamine substance(s) B comprising at least two primary amino groups. The Invention further relates to the cured composition obtained from the curable composition, and the compositions as part of coated substrates and stacks of substrates. The invention further relates to a copolymer A used in the compositions and its method of manufacture, as well as the use of the curable composition as coating material, sealant material or adhesive material.

## Description

The present invention relates to curable compositions containing butenolide-based copolymers and amine-based curing agents. The invention further relates to specific butenolide-based copolymers and their manufacture, the butanolide-based copolymers being suitable for producing amine-curable compositions, particularly coating materials, adhesives, and sealants.

### BACKGROUND OF THE INVENTION

Curable compositions are widely used in industry for coating, sealing or bonding substrates. Such compositions typically comprise, besides a polymeric binder, a curing agent, which is apt to chemically crosslink the polymeric binder, thus forming a durable polymeric network.

One commonly used class of polymeric binders in these areas of application are poly(meth)acrylates comprising reactive groups, such as hydroxy groups, which readily react with curing agents comprising free isocyanate groups, or which react at elevated temperatures with curing agents selected from the group consisting of blocked polyisocyanates and aminoplast resins.

Poly(meth)acrylates or other addition polymers are typically prepared by radical polymerization of monomers with an ethylenically unsaturated group, such as an acrylic, methacrylic, or vinyl group. Examples of such monomers include acrylic acid, methacrylic acid, alkyl esters of (meth)acrylic acid, styrene, alkyl-substituted styrene, vinyl esters, and vinyl ethers. The monomers are usually prepared from petrochemical raw materials.

Curing agents based on polyisocyanates and aminoplast resins are to be avoided due to environmental reasons.

Thus, there is an increasing demand for utilizing polymeric binders for coating, sealing or bonding substrates, which are at least partially prepared from renewable feedstock, which are curable with curing agents, which are not based on polyisocyanates and aminoplast resins.

Binder polymers at least partly prepared from renewable feedstock are known in the art. Alkyd resins for example comprise a relatively high content of fatty acids obtained from vegetable oil.

In WO 2021/084066 A1 binder polymers obtainable by copolymerizing a monomer mixture comprising a vinyl monomer and a butenolide monomer are disclosed and proposed as ingredients of coating materials. Hermens et al. also discloses this kind of copolymers in a scientific article with the title "A coating from nature," Sci. Adv. 2020, vol. 6, Issue 51.

Poskonin et al. have disclosed in Russian Journal of Organic Chemistry 35 (1999) 721-726 a scientific article with the title "Studies on substituted butane- and butenolides: XlV. Synthesis of high-molecular butenolides on the basis of 4-alkoxy-2-butenolides and vinyl monomers". Use of such copolymers for synthesis of physiologically active substances is suggested.

Butenolides are ethylenically unsaturated furanoic compounds that can be prepared from carbohydrates, i.e., a renewable feedstock. Carbohydrate feedstock such as starch, cellulose or carbohydrate-containing bio-waste can be converted into furfural, hydroxymethylfurfural, or related furan derivatives by dehydration and then oxidized into lactones or other butenolides. The preparation of butenolides is for example described in Chapter II of J.C. de Jong, "Asymmetric Diels-Alder reactions with 5-menthyloxy-2(5H)-furanones," Thesis University of Groningen, 2006, accessible via https://research.rug.nl/en/publications/asymmetric-diels-alder-reactions-with-5-menthyloxy-25h-furanones.

In the experimental section of the above-mentioned WO 2021/084066 A1 coatings were obtained from the butenolide-based polymeric binder material by physically drying a solventborne composition which only contained the polymeric binder and no curing agents. Physical drying was carried out a 23 °C and 50 % relative humidity for 7 days. The hardness (according to ISO 1522) was determined after two weeks of storage at the above conditions. However, the inventors of the present invention found, that a physically dried film containing such copolymers as described in WO 2021/084066 A1 completely lacks solvent resistance and is thus, not suitable as a durable coating, sealant, or adhesive in many applications.

Although WO 2021/084066 A1 mentions the fictitious possibility to crosslink the polymeric binders described therein with a hydroxy or thiol functional curing agent or a polymer with hydroxy or thiol groups, it was not disclosed by the inventors of WO 2021/084066 A1 under which conditions such crosslinking with hydroxy or thiol groups containing curing agents may occur and whether any promotors or catalysts are necessary for crosslinking. Consequently, it was not even disclosed, whether any of such fictitious crosslinking reaction occurs and what the properties of a resulting coating may be.

The inventors of the present invention have found, and demonstrate in the experimental part of the present invention, that the crosslinking reaction as proposed in WO 2021/084066 A1 does not occur or does not occur efficiently with the proposed hydroxy- or thiol-functional curing agents.

Thus, there is still a need for composition useful as coating material, sealant material and adhesive material making use of polymeric binders based on renewable feedstock which are curable and form durable cured materials having an increased solvent resistance.

### SUMMARY OF THE INVENTION

The above aim was achieved by providing a curable composition comprising:
A) a copolymer A formed by copolymerization of a monomer mixture, the monomer mixture comprising
   a. one or more monomers from the class of butenolides, with
   b. one or more vinyl functional monomers; and
B) one or more polyamine substances B, the polyamine substance(s) B comprising at least two primary amino groups.

The term "curable," in relation to the composition, refers to the ability of the composition to cure. The term "curing," as used herein, is defined in accordance with the "Compendium of Polymer Terminology and Nomenclature" (IUPAC Recommendations 2008) as being a chemical process of converting a prepolymer or a polymer into a polymer of higher molar mass and then into a network. Curing is achieved by the induction of chemical reactions which herein require mixing the copolymer with a chemical curing agent.

The term "comprising," as used herein, is used in accordance with its common meaning in a non-excluding way, i.e., in the sense of "containing." Thus, the term "comprising," does also not exclude the meaning "consisting of", which is just a special case of "comprising." Consequently, when used in the present invention, the term "comprising," denotes for both, "containing" and "consisting of."

The term "copolymer," as used herein, is defined in accordance with the "Compendium of Polymer Terminology and Nomenclature" (IUPAC Recommendations 2008) as being a polymer derived from more than one species of monomer. Copolymers that are obtained by copolymerization of two monomer species are sometimes termed bipolymers, those obtained from three monomers terpolymers, those obtained from four monomers quaterpolymers, etc.

The term "monomer from the class of butenolides," as used herein and in accordance with the general understanding of this term, denotes for a monomer of the generic class of butenolides, i.e., for the unsubstituted butenolide (i.e., 2(5H)-furanone) as well as for substituted butenolides.

The term "vinyl-functional monomer," as used herein, denotes for a (H₂C=CH)-functional monomer. It is to be distinguished from "(meth)acryl-functional monomers," which *formally* may contain a "vinyl functionality" in case of being an acryl-functional (i.e., H₂C=CH-C=O) monomer. However, the vinyl part of an acryl group is to be understood as part of the latter more complex group. Consequently, a "vinyl-functional monomer" is the same as a "non-(meth)acrylic-functional, vinyl-functional monomer."

The term "substance," as used herein, encompasses compounds such as monomers or oligomers having a definite molecular weight as well as oligomers and polymers being polydisperse.

The curable composition as described above and any of its preferred embodiments is herein also denoted as curable composition of the invention or curable composition according to the invention.

The invention further provides a copolymer A, as an intermediate product of the formation the curable and the cured composition of the invention, obtainable by copolymerizing of a monomer mixture, the monomer mixture comprising a. one or more monomers from the class of butenolides, and b. one or more vinyl functional monomers, the vinyl functional monomer having the following structure: H₂C=CH-R², wherein R² is an organyl group, preferably an organyl group as defined in the detailed description of the present invention.

This copolymer A as described above and any of its preferred embodiments is herein also denoted as copolymer A of the invention or copolymer A according to the invention.

Further provided is a method of producing copolymer A of the invention, comprising polymerizing, a monomer mixture comprising one or more monomers from the class of butenolides, with one or more vinyl functional monomers, the vinyl functional monomer having the following structure: H₂C=CH-R², wherein R² is an organyl group, preferably an organyl group as defined in the detailed description of the present invention, by radical polymerization in the presence of a radical initiator, at a temperature in the range of ≥ 100 °C and ≤ 180 °C.

The invention further provides a cured composition obtainable by curing the curable composition of the invention.

The cured composition as described above and any of its preferred embodiments is herein also denoted as cured composition of the invention or cured composition according to the invention.

Further provided is a coated substrate, the substrate comprising at least one surface, which is at least partially coated with the curable or cured composition of the invention.

The coated substrate as described above and any of its preferred embodiments is herein also denoted as coated substrate of the invention or coated substrate according to the invention.

Also provided is a stack of at least two adjacent substrates, the curable or cured composition of the invention being between the adjacent substrates bonding the adjacent substrates together.

The stack of at least two adjacent substrates as described above and any of its preferred embodiments is herein also denoted as stack of at least two adjacent substrates of the invention or stack of at least two adjacent substrates according to the invention.

Further provided is the use of a curable composition according to the invention as a coating material, sealant material or adhesive material.

According to EN ISO 4618:2006 a "coating material" is a product, in liquid, paste or powder form, that, when applied to a substrate, forms a film possessing protective, decorative and/or other specific properties. "Sealant materials" and "adhesive materials" differ from "coating materials" in that typically a "gap" between two or more substrates or "hole" in a substrate is sealed by applying the sealant material, and in case of the adhesive material two or more substrates are bonded together, e.g., forming a stack of at least two adjacent substrates, according to the invention.

This use is also denoted as use of the invention or use according to the invention.

### DETAILED DESCRIPTION OF THE INVENTION

### Curable Compositions

The curable compositions of the present invention comprise at least the copolymers A and the polyamine substance B. The curable compositions may contain varying amounts of organic solvents and/or water, or they may be free or organic solvents and/or water, depending on their field of application.

### Copolymers A

The copolymer A comprised in the curable compositions of the present invention is obtainable by copolymerization of a monomer mixture comprising
a. one or more monomers from the class of butenolides, with
b. one or more vinyl functional monomers.

In this context "comprising" means that the presence of other monomers c. besides a. and b. is not excluded.

In the following the a. monomers from the class of butenolides, b. vinyl functional monomers, and the c. further ethylenically unsaturated monomers differing from a. and b. will be described in more detail.

### a. Monomers from the Class of Butenolides

In principle the monomer or monomers from the class of butenolides can be selected from 2(5H)-furanone and substituted 2(5H)-furanones, wherein one or more of the hydrogen atoms are substituted. As substituents, organyl groups or organyloxy groups may serve. The term "organyl group," as used herein, is defined in accordance with "IUPAC. Compendium of Chemical Terminology, 2nd ed. (the "Gold Book")" (Compiled by A. D. McNaught and A. Wilkinson. Blackwell Scientific Publications, Oxford (1997); Online version (2019-) created by S. J. Chalk. ISBN 0-9678550-9-8, https://doi.org/10.1351/goldbook) as being any organic substituent group, regardless of functional type, having one free valence at a carbon atom. Consequently, an "organyloxy group" is a group "organyl-O," i.e., in formula (I) below, x = 1.

Most preferred amongst the monomers from the class of butenolides are those being 5-organyl-2(5H)-furanone monomers and 5-organyloxy-2(5H)-furanone monomers, the latter ones being most preferred.

The preferred monomers from the class of butenolides can be depicted by general formula (I) 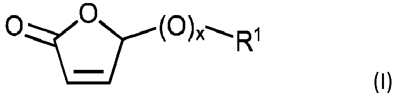 wherein x = 0 or 1, preferably x = 1; and R¹ is an organyl group.

The organyl group R¹ contains hydrogen and carbon atoms, and optionally contains one or more heteroatoms selected from the group consisting of oxygen, sulfur, nitrogen, and halogen. If heteroatoms are comprised, they are preferably comprised as functional groups, which do not react with the butenolide under polymerization conditions. This is particularly the case if the heteroatom is an ether oxygen, a thioether sulfur, a halogen atom, such as a fluorine or chlorine atom, or if the heteroatom is part of one or more functional groups selected from carbonyl groups, ester groups, amide groups, urea groups, urethane groups, tertiary amine groups or heterocyclic groups, such as furfuryl groups or tetrahydrofurfuryl groups. On the other hand, groups containing a reactive hydrogen such as OH groups, SH groups should preferably not be contained in organyl group R¹

Even more preferred the organyl group R¹ is a hydrocarbyl group which is
i. saturated or unsaturated, preferably saturated.
ii. linear, branched, or cyclic, preferably linear or branched; and
iii. aliphatic or aromatic, preferably aliphatic.

The term "aliphatic," as used herein in any context includes linear, branched, cycloaliphatic and araliphatic.

Preferably the organyl group R¹ contains carbon atoms in the range from 1 to 32, more preferred 1 to 22 and most preferred 1 to 12 carbon atoms.

Examples of suitable alkyl radials are methyl, ethyl, n-propyl, isopropyl, n-butyl, tert-butyl, secbutyl, isobutyl, amyl, isoamyl, hexyl, cyclohexyl, norbornyl and menthyl (2-isopropyl-5-methylcyclohexan-1-yl).

It is possible to employ mixtures of two or more monomers from the a. class of butenolides in the copolymerization with the b. one or more vinyl functional monomers to customize the properties of the copolymer to the specific needs of the later field of application of the curable composition of the invention; or to customize the properties to obtain a universal curable composition, which is suitable in many applications.

### b. Vinyl Functional Monomers

The vinyl functional monomers are preferably selected from the group consisting of α-vinyl hydrocarbons, amongst which α-olefins are particularly preferred, vinyl ethers, and vinyl esters.

The preferred vinyl functional monomers can be depicted by general formula (II) 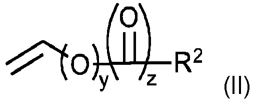 wherein y = z = 0 or1; or y = 1 and z = 0; and R² is an organyl group.

R² is independently defined in the same way as R¹ in formula (I).

Preferably the organyl group R² contains from 1 to 22 more preferred from 1 to 18 and most preferred from 1 to 12 carbon atoms.

Even more preferred the organyl group R² is a hydrocarbyl group which is
i. saturated or unsaturated, preferably saturated;
ii. linear, branched, or cyclic, preferably linear or branched; and
iii. aliphatic or aromatic, preferably aliphatic.

In a first case, y = z = 0. In this case the vinyl functional monomers are preferably α-olefins, wherein R² preferably containing from 6 to 22, more preferred from 6 to 18 and most preferred from 6 to 12 carbon atoms.

Examples of suitable vinyl functional monomers wherein y = z = 0 are styrene and α-olefins, such as hexene, octene, diisobutene, decene, dodecen, tetradecen, hexadecane, octadecene, eicosane and docosene.

In a second case, y = z =1. In this case the vinyl functional monomers are vinyl ester, wherein R² preferably contains from 1 to 12, more preferred from 1 to 10 and most preferred from 1 to 8 carbon atoms.

Examples of suitable vinyl functional monomers wherein y = 1 z = 1 are vinyl ester, such as vinyl acetate, vinylneodecanoate, vinyl ethylhexanoate, and vinyl decanoate.

In a third case, y = 1 and z = 0. In this case the vinyl functional monomers are vinyl ethers, wherein R² preferably contains from 1 to 22, more preferred from 2 to 20 and most preferred from 4 to 18 carbon atoms.

Examples of suitable vinyl functional monomers wherein y = 1 and z = 0 are vinyl ethers, such as methyl vinylether, n-butyl vinyl ether, iso-butyl vinyl ether, cyclohexyl vinyl ether, phenyl vinyl ether, 2-ethylhexyl vinyl ether, and n-dodecyl vinyl ether, and octadecylvinylether.

The monomer mixture used in the copolymerization to produce copolymer A may have any suitable molar ratio of the
a. one or more monomers from the class of butenolides, to the
b. one or more vinyl functional monomers.

Preferably, the molar ratio of the a. one or more monomers from the class of butenolides to the b. one or more vinyl functional monomers is in the range from 1:3 to 3:1, more preferably from 1:2 to 2:1, even more preferably from 1 :1.5 to 1.5:1, still more preferably from 1:1.2 to 1.2:1, or even from 1:1.1 to 1.1:1, such as 1:1.

Preferably the monomer mixture consists of the a. one or more monomers from the class of butenolides, and the b. one or more vinyl functional monomers. In such case the aforementioned molar ratios apply likewise.

For example, in the field of coating materials, particularly if polymers with a high viscosity or even solid-state polymers are desired, it is often preferred to use a. one or more monomers from the class of butenolides comprising an organyl group R¹ containing a small number of carbon atoms, such as 1 to 3 or preferably just 1 or 2 carbon atoms, preferably is an alkyl group with 1 to 3, more preferred 1 or 2 carbon atoms. In such cases it is preferred to use b. one or more vinyl functional monomers, preferably vinyl ether monomers as co-monomers, wherein R² contains 1 to 4 carbon atoms, preferably R² being an alkyl group with 1 to 4 carbon atoms.

However, in other application areas of coating materials more liquid polymers might be of advantage. If this is desired, it is preferred to use a. one or more monomers from the class of butenolides comprising an organyl group R¹ containing 2 or more carbon atoms, such as 3 or more, or 4 or more. In such cases it is preferred to use b. one or more vinyl functional monomers, preferably vinyl ether monomers and/or alpha-olefins as co-monomers, wherein R² contains 4 or more, such as 5 or 6 or more carbon atoms, up to preferably 12, 14 or 16 carbon atoms, preferably R² being an alkyl group.

Further, in adhesive material applications it is often preferred to use liquid polymers wherein the organyl group R¹ contains at least 4 carbon atoms, more preferred at least 5 or 6 carbon atoms and wherein the b. one or more vinyl functional monomers are preferably vinyl ether monomers and/or alpha-olefins, wherein R² contains 4 or more, such as 5 or 6 or more carbon atoms, up to preferably 12, 14 or 16 carbon atoms, preferably R² being an alkyl group.

### c. Further Ethylenically Unsaturated Monomers

As mentioned above, c. one or more further ethylenically, preferably monoethylenically, unsaturated monomers differing from those as defined under a. and b. may also be employed in the copolymerization to produce copolymers A.

The preferred further ethylenically unsaturated monomers are preferably monoethylenically unsaturated and can be depicted by general formulae (III), (IVa), (IVb) and (V): 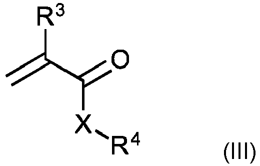 wherein R³ is H or CH₃, X = O, S, NH or NR^{a} with R^{a} being an organyl group, preferably a hydrocarbyl group with 1 to 22 carbon atoms, more preferred 1 to 12 carbon atoms and most preferred 1 to 8 carbon atoms, such as 1, 2 or 3 and R⁴ being an organyl group as defined for R² in formula (II); 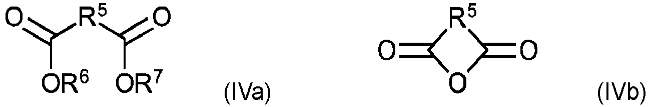 wherein R⁵ is selected from the group consisting of 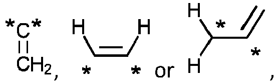 the asterisks being at the carbon atoms which are bound to the adjacent "C=O" groups, R⁶ and R⁷ independently of each other being defined as for R² in formula (II);

R⁸N-CH=CH₂ (V)

wherein R⁸ together with the N in formula (V) forms a heterocyclic residue.

Such ethylenically unsaturated monomers are, if employed, preferably monoethylenically unsaturated monomers possessing a (meth)acrylic group, or belonging to ethylenically unsaturated dicarboxylic acids, or their anhydrides or esters. The term "(meth)acrylic," as used herein encompasses acrylic as well as methacrylic.

Examples of suitable ethylenically unsaturated monomers comprising a (meth)acrylic group are, e.g., (meth)acrylic acid, (meth)acrylic acid esters, particularly alkyl or hydroxyalkyl esters of (meth)acrylic esters. Examples of suitable ethylenically unsaturated dicarboxylic acids, or their anhydrides or ester are, e.g., maleic acid and itaconic acid and their anhydrides or ester, or methylene malonates.

Ethylenically unsatured monomers of formula (V) are, e.g., N-vinyl monomers such as vinylpyrrolidone, vinylcaprolactam and vinylimidazol

If contained, the monomer mixture consisting of monomers a., b., and c., preferably comprises 0 or 1 mole-% to less than 25 mole-% of further ethylenically unsaturated monomers, more preferably 1 mole-% to less than 20 mole-%, even more preferably 2 mole-% to less than 15 mole-%, most preferred 5 mole-% to less than 10 mole-%.

Most preferably, the monomer mixture is free of the c. further ethylenically unsaturated monomers, i.e., the monomer mixture used in the copolymerization reaction to obtain copolymer A consists of a. one or more monomers from the class of butenolides, and b. one or more vinyl functional monomers.

### Preparation of Copolymers A

The copolymerization is preferably a radical polymerization process. Conditions that allow the monomers a., b., and c. to copolymerize into an addition polymer by radical polymerization are well-known in the art. Suitable conditions typically include the presence of an initiator.

The copolymerization may be carried out in an organic solvent (solvent polymerization). In solvent polymerization, the monomer mixture is dissolved in a suitable organic solvent, heated to the desired reaction temperature and a suitable initiator is added in a suitable amount. Typically, the temperature during solvent polymerization is in the range from 50 °C to 180 °C, preferably from 70 °C to 160 °C. It will be appreciated that the optimum polymerization temperature will depend on the decomposition temperature of the initiator used and the boiling temperature of the any monomers at the pressure at which the polymerization is carried out. The monomer mixture may be dissolved in any suitable solvent during the copolymerization. Suitable organic solvents are solvents in which all monomers in the monomer mixture and the resulting copolymer dissolve at polymerization conditions. Preferably, the organic solvent is an oxygen atom(s) containing organic solvent such as for example an alcohol, glycol ether, glycol ester, alkyl acetate, ketone, ester, or glycol ether/ester. More preferably, the solvent is a glycol ether or an alkyl acetate. 1-Methoxy-2-propanol and butyl acetate are particularly preferred solvents.

Preferably, if the vinyl functional monomer of general formula (II) above is an α-olefin (y=z=0 and R² is an organyl, preferably a hydrocarbyl group), or if a mixture of the vinyl functional monomers contains such α-olefins, the reaction temperature in the radical polymerization process is ≥ 100 °C, more preferred ≥ 120 °C or even more preferred ≥ 130 °C, but in all cases preferably < 180 °C. For such high temperature radical polymerization process, it is preferred that an initiator such as di-tert.-butyl peroxide is used, which does not readily decompose under such conditions. Typically, the initiator is added to the monomer mixture of the monomers employed in the radical copolymerization process (monomers a., b. and optionally employed monomers c.) at the beginning during preferably up to 1 hour, more preferred up to 45 min and most preferred up to 30 min. The polymerization is preferably carried out for 2 to 10 hours, more preferred 2.5 to 6 hours and even more preferred 3 to 5 hour.

Preferably, if the vinyl functional monomer of general formula (II) above is a vinyl ether (y=1, z=0 and R² is an organyl, preferably a hydrocarbyl group) or a vinyl ester (y=z=1 and R² is an organyl, preferably a hydrocarbyl group), or if a mixture of the vinyl functional monomers contains such vinyl ethers and/or vinyl esters, the reaction temperature in the radical polymerization process is ≤ 100 °C, more preferred ≤ 95 °C or even more preferred ≤ 90 °C, but in all cases preferably > 50 °C, in case no α-olefins are employed in the reaction. This process can be depicted as "low-temperature" variant of the radical polymerization process. In the afore-mentioned case, it is also possible to use the "high-temperature" variant instead of the "low-temperature" variant, thus typically leading to lower number-average and weight-average molecular weights of the resulting copolymers. If a mixture of α-olefins with vinyl ethers and/or vinyl esters is employed, the "high-temperature" variant of the radical polymerization process as described in the preceding paragraph is preferably used.

The "low-temperature" variant of the radical polymerization process employs as initiator, e.g., tert-butylperoxy-2-ethylhexanoate. Typically, the initiator is added to the monomer mixture of the monomers employed in the radical copolymerization process (monomers a., b. and optionally employed monomers c.) at the beginning during preferably up to 1 hour, more preferred up to 45 min and most preferred up to 30 min. The polymerization is preferably carried out for 2 to 10 hours, more preferred 2.5 to 6 hours and even more preferred 3 to 5 hour.

Any suitable initiator may be used. Suitable initiators are known in the art and include organic peroxides and azo initiators. Examples of azo initiators include azobisisobutyronitrile (AIBN) and 2,2'-azodi(2-methylbutyronitrile) (AMBN). Examples of suitable organic peroxides include tert-butyl peroxy-3,5,5-trimethylhexanoate, benzoyl peroxide, lauroyl peroxide, di-t-butyl peroxide, acetyl peroxide, t-butyl peroxy 2-ethylhexyl carbonate, t-butyl peroxy octanoate, t-amyl peroxy octanoate, tert-butylperoxy-2-ethylhexanoate and t-butyl peroxy benzoate. The initiator may be added in any suitable amount, typically up to 6 mole-% based on the total moles of ethylenically unsaturated monomers (monomers a., b., and, if contained c.), preferably in the range of from 1 to 4 mole-%. The total amount of initiator may be added in one, but preferably two or three steps, i.e., a first amount at the start of the polymerization and a further amount during the polymerization reaction.

Optionally, a chain transfer agent is used during polymerization. Any suitable chain transfer agent may be used in a suitable amount. Suitable chain transfer agents are known in the art and include, e.g., mercaptoethanol, methyl mercaptopropionate, 1-dodecanethiol, 1-octanethiol, thioglycolic acid, 2-hydroxy-1-ethanethiol, and isopropanol.

The copolymerization may be carried out batch-wise or semi batch-wise, i.e., by putting all monomers together in the pre-charge and dosing the initiator gradually during the polymerization, or by gradually dosing part of the monomers and initiator during copolymerization. It has been found that the copolymer thus obtained has properties that makes it suitable to be used as binder polymer in coating materials, sealant material and adhesive materials. The binder polymer typically has a relatively high content of the butenolide, a component that can be obtained from renewable feedstock.

In particular, a binder polymer with preferably a glass transition temperature in the range of from -80 °C to + 80 °C, as measured by differential scanning calorimetry (DSC) according to ISO 11357-2 using a heating rate of 20 K/min, can be obtained.

The copolymers A generally possess a number average molecular weight preferably in the range from 700 to 4000 g/mol, more preferred in the range from 800 to 3500 g/mol and even more preferred in the range from 900 to 3000 g/mol; and a weight average molecular weight preferably in the range from 1400 to 20000 g/mol, more preferred in the range from 1500 to 15000 g/mol and even more preferred in the range from 1600 to 10000 g/mol. The polydispersitiy P_{D} of the copolymers A is preferably in the range from 1.2 to 5.0, more preferred in the range from 1.3 to 4.5 and even more preferred in the range from 1.4 to 4.0. The number average and weight average molecular weights are determined using gel permeation chromatography (GPC) as described in the experimental section of the specification. The polydispersity P_{D} is calculated as follows: P_{D} = M_{w}/Mₙ.

### Copolymers A obtained from Monomer Mixtures comprising b. one or more Vinyl Functional Monomers with y = z = 0

Copolymers A obtained by copolymerization of monomer mixtures, where the monomer mixtures comprise a. one or more monomers from the class of butenolides, and b. one or more vinyl functional monomers of formula (II), wherein y = z = 0, have not yet been described in prior art, but are highly suitable as an intermediate or starting compound in the manufacture of the cured compositions of the present invention.

Typically, these copolymers A are liquid and can thus easily be mixed with liquid polyamine substances B or can dissolve polyamine substances B without the need of using organic solvents. This is particularly advantageous in case the curable composition is an adhesive composition/adhesive material. While curable compositions being used as coating material are typically spray applied and need organic solvents and/or water to possess spray viscosity, adhesives are often applied by other techniques. Furthermore, adhesive materials are typically applied to fill the space between two substrates which are bonded together, thus drying (evaporation of organic solvents) is more difficult. Consequently, to still obtain liquid compositions without the need of organic solvents it is of advantage to use liquid starting materials.

These copolymers are hereinafter denoted as copolymers A of the invention.

### Manufacture of Copolymers A of the Invention

While copolymers A as used in the invention can be obtained in accordance with any of the above general preparation methods, an improved process to obtain the copolymers A of the invention, which contain, in polymerized form, one or more vinyl functional monomer having the following structure: H₂C=CH-R², wherein R² is an organyl group, preferably an organyl group as defined in the detailed description of the present invention, is disclosed herein-below.

The method of producing copolymer A of the invention, comprises polymerizing, a monomer mixture comprising one or more monomers from the class of butenolides, with one or more vinyl functional monomers, the vinyl functional monomer having the following structure: H₂C=CH-R², wherein R² is an organyl group, preferably an organyl group as defined in the detailed description of the present invention, by radical polymerization in the presence of a radical initiator, at a temperature in the range of ≥ 100 °C and ≤ 180 °C.

The radical initiator is preferably selected from those which do not readily decompose at the polymerization temperature, such as di-tert.-butyl peroxide.

Preferably the reaction temperature is ≥ 120 °C or even more preferred ≥ 130 °C, but in all cases preferably < 180 °C.

Besides the monomers a. (one or more monomers from the class of butenolides) and b. (one or more vinyl functional monomers, the vinyl functional monomer having the following structure: H₂C=CH-R², wherein R² is an organyl group), c. further optional ethylenically unsaturated monomers might be employed in the reaction mixture. The preferred embodiments of the monomers a., b. and c., which can be used in the manufacture of copolymers A of the invention, are described herein-above.

Typically, the initiator is added to the monomer mixture of the monomers employed in the radical copolymerization process (monomers a., b. and optionally employed monomers c.) at the beginning during preferably up to 1 hour, more preferred up to 45 min and most preferred up to 30 min. The polymerization is preferably carried out for 2 to 10 hours, more preferred 2.5 to 6 hours and even more preferred 3 to 5 hour.

### Polyamine Substance 8

The curable composition of the present invention further contains one or more polyamine substances B, the polyamine substance(s) B, also polyamine curing agent(s) B hereinafter, comprise at least two primary amino groups.

The polyamine substance B can be aromatic or aliphatic (including cycloaliphatic) and is preferably aliphatic.

Even more preferred the polyamine substance B is monomeric or oligomeric with a definite molecular weight, molecular weight preferably being in the range from 60 to 600 g/mol, more preferred in the range from 100 to 300 g/mol and most preferred in the range from 150 to 250 g/mol; or the polyamine substance B is oligomeric or polymeric and polydisperse having a number-average molecular weight preferably being in the range from 600 to 5000 g/mol, more preferred in the range from 600 to 3000 g/mol and most preferred in the range from 1000 to 2000 g/mol.

The polyamine substances B, include, for example, aliphatic and cycloaliphatic polyamines, aromatic and araliphatic polyamines and polymeric amines, for example polyamidoamines. Amine curing agents cure (crosslink) copolymers containing cyclic moieties of the following formula (wherein die asterisks indicate the carbon atoms which are bound to the neighboring atoms of the copolymer): 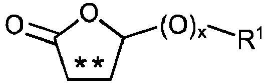 by reaction of the primary functions of the polyamine substances B with the above moieties. The primary amino groups may react with the butanolide groups by incorporation of the nitrogen in the butanolide ring, thus forming an imide type structure, exchanging the alkoxy group (if x = 1) at the butanolide ring, thus forming a hemiaminal type structure, or by ringopening the butanolide ring, thus forming an amide type structure. Independent of the mechanism, crosslinking occurs. Polyamine curing agents B have an average of at least two primary amino groups per molecule, for example two, three or four primary amino groups per molecule. They may also additionally comprise one or more tertiary amino groups. Preferably the number of primary amino groups is in the range from 2 to 15, more preferred 2 to 12, even more preferred in the range from 2 to 10 and most preferred in the range from 2 to 8.

Suitable polyamines are, e.g.:
i. linear or branched aliphatic polyamines such as ethylenediamine, 1,2- and 1,3-propanediamine, neopentanediamine, hexamethylenediamine, octamethylenediamine, 1,10-diamino-decane, 1,12-diaminododecane, diethylenetriamine, triethylenetetramine, tetraethylenepentamine, 2,2-dimethylpropylenediamine, trimethylhexamethylene-diamine, 1-(3-aminopropyl)-3-aminopropane, 1,3-bis(3-aminopropyl)propane, 4-ethyl-4-methylamino-1-octylamine, and the like;
ii. cycloaliphatic diamines, such as 1,2-diaminocyclohexane, 1,2-, 1,3-, 1,4-bis(amino-methyl)cyclohexane, 1-methyl-2,4-diaminocyclohexane, , 4-(2-aminopropan-2-yl)-1-methylcyclohexane-1-amine, isophorone-diamine, 4,4'-diaminodicyclohexylmethane, 3,3'-dimethyl-4,4'-diamino-dicyclohexylmethane, 3,3',5,5'-tetramethyl-4,4'-diaminodicyclohexylmethane, 4,8-diaminotricyclo[5.2.1.0]decane, norbornanediamine, menthanediamine, menthenediamine, and the like;
iii. aromatic diamines, such as tolylenediamine, bis(4-aminophenyl)methane (MDA or methylene-dianiline), bis(4-aminophenyl) sulfone (also known as DADS, DDS or dapsone), and the like;
iv. araliphatic diamines, such as xylylenediamine, especially meta-xylylenediamine (MXDA), and the like;
v. polyetheramines, especially difunctional and trifunctional primary polyetheramines based on polypropylene glycol, polyethylene glycol, polybutylene oxide, poly(1,4-butanediol), polytetrahydrofuran (polyTHF) or polypentylene oxide, for example 4,7,10-trioxatridecane-1,3-diamine, 4,7,10-trioxatridecane-1,13-diamine, 1,8-diamino-3,6-dioxaoctane (XTJ-504 from Huntsman), 1,10-diamino-4,7-dioxadecane (XTJ-590 from Huntsman), 1,12-diamino-4,9-dioxadodecane (from BASF SE), 1,3-diamino-4,7,10-trioxatridecane (from BASF SE), primary polyetheramines based on polypropylene glycol having a mean molar mass of 230, for example Polyetheramine D 230 (from BASF SE) or Jeffamine^{®} D 230 (from Huntsman), difunctional, primary polyetheramines based on polypropylene glycol having a mean molar mass of 400, e.g. Polyetheramine D 400 (from BASF SE) or Jeffamine^{®} XTJ 582 (from Huntsman), difunctional, primary polyetheramines based on polypropylene glycol having a mean molar mass of 2000, for example Polyetheramine D 2000 (from BASF SE), Jeffamine^{®} D2000 or Jeffamine^{®} XTJ 578 (each from Huntsman), difunctional, primary polyetheramines based on propylene oxide having a mean molar mass of 4000, for example Polyetheramine D 4000 (from BASF SE), trifunctional, primary polyetheramines prepared by reacting propylene oxide with trimethylolpropane, followed by an amination of the terminal OH groups, having a mean molar mass of 403, for example Polyetheramine T 403 (from BASF SE) or Jeffamine^{®} T 403 (from Huntsman), trifunctional, primary polyetheramine prepared by reacting propylene oxide with glycerol, followed by an amination of the terminal OH groups, having a mean molar mass of 5000, for example Polyetheramine T 5000 (from BASF SE) or Jeffamine^{®} T 5000 (from Huntsman), aliphatic polyetheramines formed from a propylene oxide-grafted polyethylene glycol and having a mean molar mass of 600, for example Jeffamine^{®} ED-600 or Jeffamine^{®} XTJ 501 (each from Huntsman), aliphatic polyetheramines formed from a propylene oxide-grafted polyethylene glycol and having a mean molar mass of 900, for example Jeffamine^{®} ED-900 (from Huntsman), aliphatic polyetheramines formed from a propylene oxide-grafted polyethylene glycol and having a mean molar mass of 2000, for example Jeffamine^{®} ED-2003 (from Huntsman), difunctional, primary polyetheramine prepared by amination of a propylene oxide-grafted diethylene glycol, having a mean molar mass of 220, for example Jeffamine^{®} HK-511 (from Huntsman), aliphatic polyetheramines based on a copolymer of poly(tetramethylene ether glycol) and polypropylene glycol having a mean molar mass of 1000, for example Jeffamine^{®} XTJ-542 (from Huntsman), aliphatic polyetheramines based on a copolymer of poly(tetramethylene ether glycol) and polypropylene glycol having a mean molar mass of 1900, for example Jeffamine^{®} XTJ-548 (from Huntsman), aliphatic polyetheramines based on a copolymer of poly(tetramethylene ether glycol) and polypropylene glycol having a mean molar mass of 1400, for example Jeffamine^{®} XTJ-559 (from Huntsman), polyethertriamines based on a butylene oxide-grafted, at least trihydric alcohol having a mean molar mass of 400, for example Jeffamine^{®} XTJ-566 (from Huntsman), aliphatic polyetheramines prepared by amination of butylene oxide-grafted alcohols having a mean molar mass of 219, for example Jeffamine^{®} XTJ-568 (from Huntsman), polyetheramines based on pentaerythritol and propylene oxide having a mean molar mass of 600, for example Jeffamine^{®} XTJ-616 (from Huntsman), polyetheramines based on triethylene glycol having a mean molar mass of 148, for example Jeffamine^{®} EDR-148 (from Huntsman), difunctional, primary polyetheramines prepared by amination of a propylene oxide-grafted ethylene glycol, having a mean molar mass of 176, for example Jeffamine^{®} EDR-176 (from Huntsman), and also polyetheramines prepared by amination of polytetrahydrofuran (polyTHF) having a mean molar mass of 250, for example PolyTHF-Amine 350 (from BASF SE), and mixtures of these amines;
vi. polyamidoamines (amidopolyamines), which are obtainable by reaction of dimeric fatty acids (for example dimeric linoleic acid) with polyamines of low molecular weight, such as diethylenetriamine, 1-(3-aminopropyl)-3-aminopropane or triethylenetetramine, or other diamines, such as the aforementioned aliphatic or cycloaliphatic diamines;
vii. adducts obtainable by reaction of amines, especially diamines, with a deficiency of epoxy resin or reactive diluent, preference being given to using those adducts in which about 5% to 20% of the epoxy groups have been reacted with amines, especially diamines;
viii. phenalkamines as known from epoxide chemistry;
ix. Mannich bases which are prepared, for example, by condensation of polyamines, preferably diethylenetriamine, triethylenetetramine, isophoronediamine, 2,2,4- or 2,4,4-trimethylhexamethylenediamine, 1,3- and 1,4-bis(aminomethyl)cyclohexane, with aldehydes, preferably formaldehyde, and mono- or polyhydric phenols having at least one aldehyde-reactive ring location, for example the various cresols and xylenols, p-tert-butylphenol, resorcinol, 4,4'-dihydroxydiphenylmethane, 4,4'-dihydroxydiphenyl-2,2-propane, but preferably phenol.

Each of the afore-mentioned polyamine substances B/polyamine curing agents B can be used alone or in combination with one or more of the other polyamine substances/curing agents B. Particularly preferred are mixtures of difunctional amines from the group of the aliphatic, cycloaliphatic, and aromatic amines with the afore-mentioned polyetheramines.

Preferred polyamine substances B are aliphatic polyamines, especially 2,2-dimethylpropylene-diamine, araliphatic diamines, especially m-xylylenediamine (MXDA) and cycloaliphatic diamines, especially isophorone diamine, and 4,4'-diaminodicyclohexylmethane (Dicykan). Preference is also given to difunctional or trifunctional primary polyetheramines based on polypropylene glycol, for example Jeffamine^{®} D 230 or Jeffamine^{®} T 403. Particular preference is given to polyamines in which there is high mobility and low steric hindrance around the amino group, for example 4,9-dioxadodecane-1,12-diamine, 4,7,10-trioxatridecane-1,13-diamine, PolyTHF Amine 350 (BASF SE).

It is possible to use just one kind or amine substance B, or to use mixtures of the amine substances B, particularly mixtures of those specified as preferred.

### Ratio of the Copolymer A to the Polyamine Substance B

Since the curing reaction is between the copolymers A as defined above and the polyamine substances B above, the ratio of copolymers A to polyamine substances B depend on the number of reactive groups of both.

The polyamine substances B, i.e., the curing agents cure (crosslink) copolymers A containing cyclic moieties of the following formula (wherein die asterisks indicate the carbon atoms which are bound to the neighboring atoms of the copolymer): 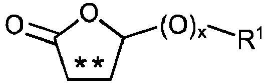 by reaction of the primary amino functions of the polyamine substances B with the above moieties of copolymer A.

Preferably, in the curable compositions of the invention, the molar ratio of the sum of primary amino groups contained in the polyamine substance B to the cyclic moieties 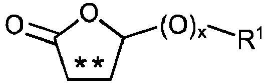 contained in the copolymer A, wherein die asterisks indicate the carbon atoms which are bound to the neighboring atoms of the copolymer, is in the range from 4:1 to 1:10, more preferably in the range from 2:1 to 1:6, and most preferably in the range from 1:1 to 1:2. If the aforementioned molar ratio exceeds 4:1, color and hardness of the films are likely to be negatively affected. If the afore-mentioned molar ratio goes below 1:10, chemical and mechanical resistance of the films are likely to be negatively affected.

### Solvents C

The curable composition may contain solvents C. Preferred solvents are organic solvents and/or water. Particularly preferred are organic solvent, aprotic organic solvents being even more preferred.

If organic solvents are used, the organic solvents are preferably selected to be non-reactive solvents, i.e., solvents which do not react with the copolymers A and the polyamine substances B.

Particularly depending on the polarity of the copolymers A non-polar or polar organic solvents are preferably used. In case y = z = 0 (in formula (II)), the vinyl functional monomer is non-polar, and for x = 0 (formula (I)) with respect to the monomers from the class of butenolides, these are less polar than those wherein x = 1. Further, if organyl groups R¹ and R² in formulae (I) and (II), respectively, are hydrocarbon residues, typically the higher the number of carbon atoms in these groups, the less polar the copolymers A are.

Preferred aprotic organic solvents suitable in the present invention are selected from the group consisting of aliphatic and aromatic hydrocarbons, ketones, esters, ethers, sulfoxides, sulfones and heterocyclic solvents.

It is also possible to use mixtures of two or more different non-polar aprotic organic solvents, two or more polar aprotic organic solvents, even mixtures of at least one non-polar aprotic organic solvent with at least one polar aprotic organic solvent, or in case of water-borne systems at least one polar organic solvent with water.

Solvent based curable compositions are typically used if the curable compositions are coating material. Coating materials are often applied by spray application and need to have spray viscosity for application which is preferably adjusted by use of solvents, preferably organic solvents.

In those cases where copolymers A and/or polyamine substances are solid, but the curable compositions is to be liquid, which is preferred, it is particularly preferred to employ solvents, preferably organic solvents in the curable composition. Typically, the copolymers A are liquid, if R¹ and R² in formulae (I) and (II); respectively, are hydrocarbons, which contain at about 6 carbon atoms or more and/or which are branched residues. In such cases, particularly if the curable composition is an adhesive material or sealant material, no solvent might be required for application.

The total solvent content, i.e., the content of organic solvents and/or water, preferably varies in the range from 0 to 80 wt.-%, more preferably from 0.5 to 70 wt.-%, even more preferred from 1 to 60 wt.-%, based on the total weight of the curable composition.

### Further Ingredients D of the Curable Compositions

The curable compositions may comprise further ingredients D, particularly additives which are typically employed in coating materials, sealant materials, and adhesive materials.

Additives which can be employed in all three types of material are typically catalysts for the reaction between copolymer A and the polyamine substance B; stabilizers; colorants, such as dyes and pigments; fillers; rheology additives; defoamers, wetting and/or dispersion additives; light stabilizers and UV absorbers.

Other additives which also can be employed in all three types of material, but which are rather oriented on the specific need of the different materials are, e.g., levelling agents, which are typically used in coating materials to optimize the appearance and to guarantee a smooth surface. On the other hand, plasticizers, tougheners, adhesion promoters and tackifying resins are often used in adhesive materials and sealant materials.

If present, the total content of additives, preferably ranges from 0 to 15 wt.-%, more preferred 1 to 12 wt.-% and most preferred 2 to 10 wt.-% based on the total weight of the curable composition.

### Amounts of Ingredients in the curable Compositions

Preferably, the amounts of the ingredients in the curable compositions of the invention are in the following weight-percentage ranges based on the total weight of the curable compositions
- Copolymer(s) A:: 30 to 85 wt.-%, more preferred 40 to 80 wt.-% and most preferred
50 to 80 wt.-% with respect to solids
- Polyamine Substance(s) B:: 15 to 70 wt.-%, more preferred 20 to 60 wt.-% and most preferred
20 to 50 wt.-% with respect to solids
- Solvent(s) C:: 20 to 90 wt.-%, more preferred 30 to 80 wt.-% and most preferred
35 to 65 wt.-% with respect to overall composition

Preferably, die wt.-% amounts of copolymer(s) (A), polyamine substance(s) B, solvent(s) C and additive(s) add up to 100 wt.-%.

### Cured Compositions

The invention further provides a cured composition obtainable by curing the curable composition of the invention.

Generally, the curable compositions of the invention start curing shortly after mixing copolymers A with the polyamine substances B. Thus, the curable compositions are preferable so-called two-pack compositions comprising an "A-pack" which comprises copolymer(s) A and a "B-pack" which comprises the polyamine substance(s) B. Solvents C and additives D can be in either one of both pack or in both packs.

Since curing of the curable compositions of the invention, typically, but slowly starts at room temperature (23 °C) or below, the curable compositions are not storage-stable over a long time, but have a pot-life span, it is the time span wherein they can be processed, at 23 °C in the range of typically at least 0.5 hours up to 24 hours, more typically at least 1 hour up to 12 hours, and even more typically at least 1.5 hours to 8 hours.

To decrease the curing time, the curing temperature can be raised, preferably from room temperature to up to 180 °C, more preferred to up to 150 °C, even more preferred up to 130 °C or just up to 100 °C. Particularly good results are typically achieved at curing temperatures in the range from 80 °C to 150 °C, more preferred 90 °C to 140 °C and most preferred 100 °C to 130 °C.

### Coated Substrates

The invention further provides a substrate, the substrate comprising at least one surface, which is at least partially coated with the curable or cured composition of the invention.

Generally, any coating technique as known to one of skill in the art can be used to apply the curable composition onto the substrate. These techniques include, for example, spray coating, dip coating, roll coating, curtain coating, knife coating, spreading, pouring, dipping, impregnating, trickling, or rolling, and the like. For high demand application fields, such as coating automotive body panels, spray coating is typically used. Preference is given to employing spray application methods, such as compressed-air spraying, airless spraying, high-speed rotation, electrostatic spray application, alone or in conjunction with hot spray application such as hot-air spraying, for example.

As substrates, metallic substrates, polymeric substrates, wood, glass, ceramics, mineralbased materials, and composites of any of the afore-mentioned materials can be used.

Metallic substrates often comprise a so-called conversion coat layer (e.g., a zinc phosphating layer) and/or electrodeposition coat layer before being coated with the curable composition according to the present invention. This is particularly the case for substrates in the automotive coating field such as automotive OEM and automotive refinish coating.

To increase the adhesion on polymeric substrates, such substrates are often chemically or physically pretreated. Pretreatments may include, for example, treatment with fluorine, or a plasma, corona, or flame treatment. Often the surface is also sanded and/or polished. The cleaning can also be done manually by wiping with solvents with or without previous grinding or by means of common automated procedures, such as carbon dioxide cleaning.

The at least partial application of the curable composition of the invention by any technique, preferably by one of the above-mentioned techniques onto any kind of substrate, preferably to one or more of the above-mentioned substrates, results in an at least partially coated substrate, which is at least partially coated with the curable composition. After curing the curable coating, preferably under the conditions described under the above headline "Cured Composition," a coated substrate comprising a cured composition according to the invention is obtained. The substrate may comprise the cured composition as the only coating layer or as part of a multilayer coating. If the cured composition is part of a multilayer coating, it may preferably serve as a filler, basecoat or clearcoat.

### Stack of at least two Adjacent Substrates

The invention also provides a stack of at least two adjacent substrates, the curable or cured composition of the invention being between the adjacent substrates, thus bonding the adjacent substrates together.

This can be accomplished by at least partially applying the curable composition onto at least part of the surface of at least one of the substrates to be bonded together. In principle, the application techniques may be the same as in the formation of a coated substrate as described under the headline "Coated Substrate." However, since the curable composition is located between the surfaces of the substrates to be bonded, evaporation of solvents, which might eventually be contained in the curable composition might be more difficult. Thus, it is preferred that the curable compositions contain only a minimum amount of solvents, if at all. Therefore, their viscosity is typically higher and spray viscosity needed for spray application might not be obtained. Consequently, other techniques than spray coating might be more suitable.

While in many cases it is sufficient to apply the curable composition onto at least part of the surface of only one of the substrates to be bonded together, it is also possible to apply the curable composition at least partially on at least part of the surfaces of both (in case of two substrates) or all substrates to be bonded together.

After curing the curable coating located between the at least two substrates, preferably under the conditions described under the above headline "Cured Composition," a stack of adjacent substrates bonded together is obtained.

The substrates in the stack of at least two substrates may be same or different. Thus, it is possible to bond different substrates together. The material of the substrates may be the same as described under the headline "Coated Substrates."

### Use of the Curable Compositions

The curable compositions according to the invention are used as a coating material, particularly to produce coated substrates, or as a sealant material or adhesive material, particularly to produce a stack of at least two adjacent substrates.

In the following, the invention will be further exemplified by providing examples.

### EXPERIMENTAL SECTION

### General Methods

### Number- and Weight-Average Molecular Weights

The number-average molecular weight (Mₙ) and weight-average molecular weight (M_{w}) of copolymers A were determined by means of gel permeation chromatography (GPC) in accordance with DIN 55672-1 (date: August 2007) with tetrahydrofuran (THF) (+ 1% acetic acid) as eluent (1 ml/min) on a styrene-divinylbenzene column using polystyrene standards for calibration). The polydispersity P_{D} was calculated as follows: P_{D} = M_{w}/Mₙ.

### Tests for Coating Materials

### MEK Double-Rub Test (solvent resistance)

This test gives an impression of the chemical resistance of the cured coating. A fabric strip was attached to a MEK hammer (methyl ethyl ketone hammer type "BASF Coatings"; 1350 g). The opening in the hammer was completely filled with MEK (methyl ethyl ketone) so that the fabric strip was soaked and the coating film was always wetted. The hammer was now pulled back and forth on the cured coating (always at the same point and without pressure) until the cured coating film showed damage or reached a maximum of 200 double strokes (double rubs). The number of double strokes up to which no damage is visible was indicated.

### Gloss Measurement

Gloss provides an initial impression of the surface texture. The perception of gloss is more pronounced the more directionally the light is reflected. Clear, smooth coating films show a high gloss level, whereas rough, milky surfaces reflect the light more diffusely and thus have a lower gloss. The measured value is given in gloss units [GU], this value is related to a standard (black, polished glass panel as defined to show 100 GU). The corresponding measuring instrument (BYK Gardner micro-TRI-gloss) was calibrated before each series of measurements and measurements were carried out according to DIN EN ISO 2813:2015-02. Gloss was determined at an angle of 60°.

### Buchholz Hardness

The Buchholz hardness was determined based on the DIN EN ISO 2815:2003 standard as described in the following. The coated test panel is placed on a firm horizontal surface with the coating facing upwards. First, the feet of the testing instrument (BYK Gardner Buchholz Indentation Tester) were placed on the test panel. Then the indenter was carefully lowered, without tilting or moving sideways, until it touched the coated panel. The indenter was left, in this position, for 30±1 s, then the instrument was lifted off with the indenter first and then with the feet. Subsequently the light source and the microscope were set up and the length of the shadow caused by the indentation was measured in millimeters, 35±5 s after removing the indenter. The result is given, in millimeters, as the average of 3 measurements to the nearest 0.1 mm.

### Cross cut

Cross-cut adhesion was carried out 1 d after curing according to DIN EN ISO 2409 EN using a cross hatch kit from Byk. Adhesion is rated on a scale from 0 to 5 where a rating of 0 indicates no adhesion failure as desired for a commercially viable product.

### Tests for Adhesives

### Lap Shear Strength

The adhesive composition (butenolide copolymers plus amine) was immediately placed on test specimen (stainless steel, wood, or ABS plastics; all from Rocholl GmbH), subsequently pressed together with 2.5 cm x 2.5 cm overlap and clamped. The amount of adhesive was 0.2 g / (2.5 cm)².

The bonded parts were stored under standard conditions (temperature: 23 °C, relative humidity: 50 %). After 3 days a lap shear test with 100 mm/min is performed with a Zwick tensile tester and the shear strength was determined.

### PREPARATION EXAMPLES OF COPOLYMERS A

### General method for the polymerization at lower temperatures (< 100°C) using tert-butylperoxy-2-ethylhexanoate as initiator

All monomers and solvents were weighed in a 250 ml reactor equipped with a leaf agitator and a separated unit for initiator dosification (tert-butylperoxy-2-ethylhexanoate). The reactor was heated to 90 °C using an oil bath. As soon as the temperature was achieved, the initiator was added within 30 minutes. The reaction remained stirred at 95 °C for further 4 hours. Finally, the solvent (xylene used to dissolve the initiator) was removed at 170 °C.

### General method for the polymerization at higher temperatures (> 100°C) to increase conversion using di-tert-butylperoxide as initiator.

All monomers and solvents were weighed in a 250 ml reactor equipped with a leaf agitator and a separated unit for initiator dosification (ditert.-butylperoxide). The reactor was heated to 150 °C using an oil bath. As soon as the temperature was achieved, the initiator was added within 30 minutes. The reaction remained stirred at 160°C for further 4 hours. Finally, the solvent was removed at 170 °C.

### Synthesis of 5-methoxy-2(5H)-furanone/isobutyl vinylether (approx. 1:1 copolymer)

51,4 g methoxybutenolide and 45,6 g of Isobutylvinylether were weighed in a 250 ml reactor equipped with a leaf agitator and a separated unit for initiator dosification (5,85 g tert-butylperoxy-2-ethylhexanoate solved in 5,85 g of xylene). The reactor was heated to 90 °C using an oil bath. As soon as the temperature is achieved the initiator is added within 30 minutes. The reaction remained stirred at 95 °C for further 4 hours. Finally, the solvent (xylene used to dissolve the initiator) was removed at 170 °C.

The copolymer had a Mn = 2970 g/mol, Mw =11100 g/mol and PD= 3,7 determined via GPC and a composition of methoxybutenolide : vinylisobutylether = 52.1 mol: 47.9 mol determined via NMR.

This copolymer was used in the following inventive and comparative examples: E1, E1', E2, E3, E4, E5, E6, CE1, CE2, CE3 and CE4.

### Synthesis of 5-(n-butoxy)-2(5H)-furanone/dodecylvinylether (approx. 1:1 copolymer)

18,72 g butoxybutenolide and 25,48 g of dodecylvinylether were weighed in a 250 ml reactor equipped with a leaf agitator and a separated unit for initiator dosification (2.10 g di-tert-butylperoxide solved in 2.10 g of Xylene). The reactor was heated to 150°C using an oil bath. As soon as the temperature was achieved the initiator is added within 30 minutes. The reaction remained stirred at 160 °C for further 4 hours. Finally, the solvent (xylene used to dissolve the initiator) was removed at 170 °C.

The copolymer had a Mn = 2020 g/mol, Mw =4510 g/mol and PD= 2,2 determined via GPC and a composition of butoxybutenolide : dodecylvinylether = 48.3 mol: 51.7 mol determined via NMR.

This copolymer was used in examples E7, E8, and E9.

### Synthesis of 5-methoxy-2(5H)-furanone/dodecen (approx. 1:1 copolymer)

11.41 g Methoxybutenolide, 16,83 g of dodecen and 9,87 g of xylene were weighed in a 250 ml reactor equipped with a leaf agitator and a separated unit for initiator dosification (1,76 g di-tert-butylperoxide solved in 1,76 g of xylene). The reactor was heated to 140 °C using an oil bath. As soon as the temperature was achieved the initiator was added within 30 minutes. The reaction remained stirred at 160 °C for further 4 hours. Finally, the solvent (xylene used to dissolve the initiator) was removed at 170 °C.

The copolymer had a Mn = 1140 g/mol, Mw =1750 g/mol and PD= 1,5 determined via GPC and a composition of methoxybutenolide : dodecene = 50.2 mol: 49.8 mol determined via NMR.

This copolymer was used in example E10.

### Synthesis of 5-(n-butoxy)-2(5H)-furanone/dodecen (approx. 1:1 copolymer)

15.6 g Butoxybutenolide, 16,83 g of dodecen and 10 g xylene were weighed in a 250 ml reactor equipped with a leaf agitator and a separated unit for initiator dosification (1,75 g di-tert-butylperoxide solved in 1,75 g of xylene). The reactor was heated to 140 °C using an oil bath. As soon as the temperature was achieved the initiator was added within 30 minutes. The reaction remained stirred at 160 °C for further 4 hours. Finally, the solvent (xylene used to dissolve the initiator) was removed at 170 °C.

The copolymer had a Mn = 1200 g/mol, Mw =1850 g/mol and PD= 1,5 determined via GPC and a composition of butoxybutenolide : dodecene = 52.7 mol: 47.3 mol determined via NMR.

This copolymer was used in examples E11 and E12.

### Synthesis of 5-(n-hexoxy)-2(5H)-furanone/dodecylvinylether (approx. 1:1 copolymer)

28,07 g Hexoxybutenolide and 31,86 g of dodecylvinylether were weighed in a 250 ml reactor equipped with a leaf agitator and a separated unit for initiator dosification (2,6 g di-tert-butylperoxide solved in 2,6 g of Xylene). The reactor was heated to 150°C using an oil bath. As soon as the temperature was achieved the initiator was added within 30 minutes. The reaction remained stirred at 160°C for further 4 hours. Finally, the solvent (xylene used to dissolve the initiator) was removed at 170°C.

The copolymer had a Mn = 1890 g/mol, Mw = 3940 g/mol and PD= 2,1 determined via GPC and a composition of hexoxybutenolide : dodecylvinylether = 51.1 mol: 48.9 mol determined via NMR.

This copolymer was used in examples E13, E14 and E15.

### APPLICATION EXAMPLES

### Inventive Example E1 and Comparative Examples CE1 and CE2 (Coating Materials)

Zinc-phosphated steel panels comprising a chromium-free passivation on titanium zirconium basis (Gardobond 26S/6800/OC test panel available from Chemetall GmbH, Frankfurt, Germany) were coated with coating materials as shown in Table 1 by use of a doctor blade. In Table 1, and all following Tables, all amounts are in parts-by-weight. The wet film thickness was 100 µm. The thus coated panels were cured at 100 °C and 130 °C, respectively, for 20 min.

**Table 1**

| | **Chemical Names** | **E1** | **CE1** | **CE2** | **E1'** | **CE3** | **CE4** |
|---|---|---|---|---|---|---|---|
| **Copolymer A** | 5-methoxy-2(5H)-furanone / isobutyl vinylether (1:1 copolymer) | 44.05 | 39.10 | 39.20 | 40.00 | 42.80 | 41.65 |
| **Hardener** | 2-methyl-1,5-diaminopentane | 11.90 | - | - | - | - | - |
| | ethylene glycol bis(3-mercaptopropionate) | - | 21.80 | - | - | - | - |
| | 1,6-hexanediol | - | - | 10.80 | - | - | - |
| | 1,6-hexamethylendiamine | - | - | - | 10.90 | - | - |
| | dimethyl-1,6-hexamethylenediamine | - | - | - | - | 14.40 | - |
| | tetramethyl-1,6-hexamethylenediamine | - | - | - | - | - | 16.70 |
| **Solvent** | butyl acetate | 44.05 | 39.10 | 39.20 | 40.00 | 42.80 | 41.65 |
| | methyl ethyl ketone | - | - | 10.80 | 9.10 | - | - |
| **Sum** | | 100.00 | 100.00 | 100.00 | 100.00 | 100.00 | 100.00 |

The calculated molar ratio of polymerized 5-methoxy-2(5H)-furanone groups to the reactive groups in the hardener (NH₂, SH, and OH, respectively) was in each case 1:1.

The pot-life of the inventive curable composition E1 was about 2.5 hours (at approx. 23 °C), while the comparative compositions did not show any changes in processability.

In the methyl ethyl ketone (MEK) double rub test, only the inventive curable composition E1 showed a good performance after curing, namely 135 double rubs when cured at 100 °C for 20 min and 200 double rubs, when cured at 130 °C for 20 min. The comparative examples CE1 and CE2 did not cure at all under these conditions, i.e., they were readily removable from the substrate with MEK (0 double rubs), even if cured at 130 °C for 20 min. Consequently, an evaluation of gloss and Buchholz hardness was only carried out for the inventive example E1. Curing for 20 min at 100 °C resulted in a gloss value of 82.7 gloss units and a Buchholz hardness of 1.0 mm, while curing for 20 min at 130 °C resulted in a gloss value of 81.4 gloss units and a Buchholz hardness of 1.1 mm.

E1' and CE3 and CE4 do only differ in that the diamine used in E1' contains two primary amino groups, while the diamines in CE3 and CE4 contain two secondary and two tertiary amino groups, respectively. Both, CE3 and CE4 fail in the MEK double rub test after curing at 100 and 130 °C, respectively, since the coatings were readily removable after 3-4 double rubs in each case. Bad cross-cut adhesion results were also achieved for both, CE3 and CE4, after curing at both conditions (values in cross cut adhesin of 2-3 for CE3 and 3-4 for CD4). Only the primary amino groups containing diamine used in E1' shows good results in the double rub test (56 double rubs after curing for 20 min at 100 °C and more than 200 double rubs after curing for 20 min at 130 °C) and in cross-cut adhesion (value of 0 after curing for 20 min at 100 °C and 130 °C, respectively). Particularly the comparison of E1' and CE3 shows that the mere presence of an N-H moiety (which is present in primary and secondary amino groups) is not sufficient, thus showing that primary amino groups (-NH₂) are necessary for a sufficient crosslinking.

### Inventive Examples E2 and E3 (Coating Materials)

In analogy to example E1, panels (precoated as described for E1), were coated with inventive compositions E2 and E3 in the same layer thickness. The thus coated panels were cured at 80°C, 100 °C and 130 °C, respectively, for 20 min.

**Table 2**

| | **Chemical Names** | **E2** | **E3** |
|---|---|---|---|
| **Copolymer A** | 5-methoxy-2(5H)-furanone/isobutylvinylether (1:1 copolymer) | 46.15 | 33.37 |
| **Polyamine Substance B (Hardener)** | multifunctional cationic polyethyleneimine with branched polymer structure: | 14.00 | - |
| | 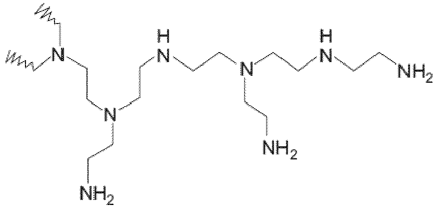 average molecular weight (GPC) = 800 | | |
| | ratio (prim./sec./tert. amino; ¹³C-NMR) = 1.0/0.9/0.5 | | |
| | 9.3 mmol primary amino groups per 1 gram | | |
| | triethylenetetramine | - | 22.74 |
| **Solvent** | butyl acetate | 30.77 | 43.89 |
| | methyl ethyl ketone | 9.09 | - |
| **Sum** | | 100.00 | 100.00 |

Inventive examples E2 and E3 show that polyamine substances based on linear or branched polyethyleneimines are suitable hardeners for curing the copolymers containing the polymerized butenolides.

The pot-life of the inventive curable composition E3 was about 2.5 hours (at approx. 23 °C).

In the methyl ethyl ketone (MEK) double rub test, gloss evaluation in gloss units and Buchholz hardness test, both inventive curable compositions E2 and E3, showed a good performance even after curing at 80 °C.

In Table 2R the corresponding results are shown.

**Table 2R**

| **Example** | **Curing Temperature (°C) for 20 min** | **MEK double rubs** | **Gloss [GU]** | **Buchholz hardness [mm]** |
|---|---|---|---|---|
| **E2** | 80 | 109 | 75.4 | 1.5 |
| | 100 | 170 | 69.8 | 1.2 |
| | 130 | 200 | 86.9 | 1.0 |
| **E3** | 80 | 200 | 72.2 | 1.4 |
| | 100 | 200 | 57.4 | 1.0 |
| | 130 | 200 | 57.1 | 0.8 |

The examples show that the use of the very short chain polyetherimide tetraethylenetetramine leads to a perfect solvent resistance, even at a curing temperature as low as 80 °C, while the branched polyethyleneimine performs best at a curing temperature of 130 °C in the solvent resistance test as well as the gloss evaluation and has an excellent hardness as well.

### Inventive Examples E4, E5 and E6 (Coating Materials)

In analogy to example E1, panels (precoated as described for E1), were coated with inventive compositions E4, E5 and E6 in the same layer thickness. The thus coated panels were cured at 100 °C and 130 °C, respectively, for 20 min.

In examples E4, E5 and E6 different molar ratios of butenolide groups to mole of primary amino groups were employed.

**Table 3**

| | **Chemical Names** | **E4** | **E5** | **E6** |
|---|---|---|---|---|
| **Copolymer A** | 5-methoxy-2(5H)-furanone/Isobutylvinylether (1:1 copolymer) | 41,54 | 33,37 | 23,95 |
| **Polyamine Substance B (Hardener)** | triethylenetetramine | 14.15 | 22.74 | 32.64 |
| **Solvent** | butyl acetate | 44,31 | 43,89 | 43,41 |
| **Sum** | | 100.00 | 100.00 | 100.00 |
| **Molar Ratio** (butanolide: primary amino groups) | | 1:1 | 1:2 | 1:4 |
| **Pot-life in hours (approx. values)** | | 2.0 | 2.5 | 5.5 |

All examples perfectly passed the double rub test (200 double rubs) at both curing temperatures and are thus suitable as solvent resistant coating material. Examples E4 and E6 with molar ratios outside the 1:1 molar ratio showed an inferior wetting behavior of the substrate used and therefore no gloss and Buchholz hardness values were determined for these examples. However, substrate wetting depends on the substrate, thus using different substrates, a better wetting may be achieved and there is also the possibility to add wetting agents as an additive to these compositions to compensate the excess of copolymer A and/or polyamine substance B. E5 possesses the same composition as E3, therefore with respect to gloss and Buchholz hardness it can be referred to example E3.

### Inventive Examples E7 to E15 (Adhesive Materials)

Solvent-less inventive adhesive materials E7 to E15 were produced by mixing copolymer A and polyamine substance B in the amounts (in parts by weight) as indicated in Table 4 to 7. In each Table a different copolymer A was used and as hardeners 3 different amine substances B were employed.

The test samples were prepared as described for the lap shear strength test procedure and the peel strength test procedure. The respective results are shown in Table R.

**Table 4**

| | **Chemical Names** | **E7** | **E8** | **E9** |
|---|---|---|---|---|
| **Copolymer A** | 5-(n-butoxy)-2(5H)-furanone/dodecylvinylether (1:1 copolymer) | 2.00 | 2.00 | 2.00 |
| **Polyamine Substance B (Hardener)** | 4,9-Dioxadodecan-1,12-diamine | 0.55 | - | - |
| | isophoronediamine | - | 0.46 | - |
| | multifunctional cationic polyethyleneimine with branched polymer structure from E2 | - | - | 0.58 |

**Table 5**

| | **Chemical Names** | **E10** |
|---|---|---|
| **Copolymer A** | 5-methoxy-2(5H)-furanone/dodecen (1:1 copolymer) | 2.00 |
| **Polyamine Substance B (Hardener)** | isophoronediamine | 0.57 |

**Table 6**

| | **Chemical Names** | **E11** | **E12** |
|---|---|---|---|
| **Copolymer A** | 5-(n-butoxy)-2(5H)-furanone/dodecen (1:1 copolymer) | 2.00 | 2.00 |
| **Polyamine Substance B (Hardener)** | isophoronediamine | 0.52 | - |
| | multifunctional cationic polyethyleneimine with branched polymer structure from E2 | - | 0.66 |

**Table 7**

| | **Chemical Names** | **E13** | **E14** | **E15** |
|---|---|---|---|---|
| **Copolymer A** | 5-(n-hexoxy)-2(5H)-furanone/dodecylvinylether (1:1 copolymer) | 2.00 | 2.00 | 2.00 |
| **Polyamine Substance B (Hardener)** | 4,9-Dioxadodecan-1,12-diamine | 0.51 | - | - |
| | isophoronediamine | - | 0.43 | - |
| | multifunctional cationic polyethyleneimine with branched polymer structure from E2 | - | - | 0.54 |

**Table R (Performance Results from the Adhesive Materials of Table 4 to 7)**

| **Examples** | **Table** | **Lap Shear Strength [MPa] on** | |
|---|---|---|---|
| | | Wood | ABS |
| **E7** | 4 | 1.9 | - |
| **E8** | 4 | 3.9 | 0.9 |
| **E9** | 4 | 5.4 | - |
| **E11** | 6 | 3.5 | - |
| **E12** | 6 | 3.5 | 1.5 |
| **E13** | 7 | 1.8 | - |
| **E14** | 7 | 1.7 | - |
| **E15** | 7 | crosslinks during mixing by stirring by hand | - |

E7 to E8 and E11 to E14 demonstrate acceptable adhesive strength, while E9 is already excellent for a room temperature curing system without brittleness.

E15 demonstrates the ability to act as an instantaneously curing adhesive, that needs special equipment for dosing, e.g., double chamber syringes with static mixer.

## Claims

1. Curable composition comprising curable composition comprising:
A) one or more copolymer(s) A formed by copolymerization of a monomer mixture, the monomer mixture comprising
a. one or more monomers from the class of butenolides, with
b. one or more vinyl functional monomers; and
B) one or more polyamine substance(s) B, the polyamine substance(s) B comprising at least two primary amino groups.

2. Curable composition according to claim 1, **characterized in that** the
a. one or more monomers from the class of butenolides are selected from monomers of formula (I) 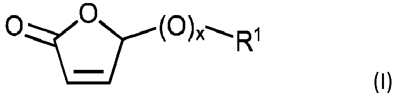 wherein x = 0 or 1, and R¹ is linear, branched, or cyclic, and saturated, or unsaturated organic residue;
and/or, the
b. one or more monomers vinyl functional monomers are selected from monomers of formula (II)
H₂C=CH-(O)_{y}(C=O)_{z}-R² (II)
wherein
y = z = 0 or 1; or
y = 1 and z = 0, and R² is a linear, branched, or cyclic, and saturated, or unsaturated organic residue.

3. Curable composition according to claim 2, **characterized in that** x = 1; and y = 0 or 1, and z = 0.

4. Curable composition according to any one or more of claims 2 or 3, **characterized in that** residues R¹ and R², independently of each other are
i. saturated or unsaturated, preferably saturated;
ii. linear, branched, or cyclic, preferably linear or branched; and
iii. aliphatic or aromatic, preferably aliphatic.

5. Curable composition according to any one or more of the preceding claims, **characterized in that**
c. one or more ethylenically unsaturated, preferably monoethylenically, unsaturated monomers differing from the a. monomers from the class of butenolides and differing from the b. one or more vinyl functional monomers are comprised in the monomer mixture.

6. Curable composition according to any one or more of the preceding claims, **characterized in that** the molar ratio of the one or more monomers of formula (I) to the one or more monomers of formula (II) is in the range from 1:3 to 3:1.

7. Curable composition according to any one or more of the preceding claims, **characterized in that** the number average molecular weight Mₙ of copolymer A is in the range from 700 to 4000 g/mol; the weight average molecular weight M_{w} of copolymer A is in the range from 1400 to 20000 g/mol; and the polydispersity M_{w}/Mₙ of copolymer A is in the range from 1.2 to 5.0.

8. Curable composition according to any one or more of the preceding claims, **characterized in that** the polyamine substance B is a linear aliphatic, branched aliphatic, cycloaliphatic or araliphatic polyamine substance B.

9. Curable composition according to any one or more of the preceding claims, **characterized in that** the molar ratio of the sum of primary amino groups contained in the polyamine substance B to the cyclic moieties 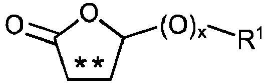 contained in the copolymer A, wherein die asterisks indicate the carbon atoms which are bound to the neighboring atoms of the copolymer, is in the range from 4:1 to 1:10.

10. Curable composition according to any one or more of the preceding claims, **characterized in that** the curable composition further comprises
C) one or more solvents, and/or
D) one or more additives.

11. Cured composition obtainable by curing the curable composition, the curable composition being as defined in any one or more of claims 1 to 10.

12. Coated substrate, the substrate comprising at least one surface, which is at least partially coated with the curable composition as defined in any one or more of claim 1 to 10 or with cured composition obtained by curing the curable composition.

13. A stack of at least two adjacent substrates, the curable composition as defined in any one or more of claim 1 to 10 or the cured composition obtained by curing the curable composition, being between the adjacent substrates bonding the adjacent substrates together.

14. Use of the curable composition, the curable composition being as defined in any one or more of claims 1 to 13, as a coating material, adhesive material, or sealant material.

15. A copolymer as defined in any one or more of claims 1 to 7, **characterized in that** at least one of the b. one or more vinyl functional monomers is a monomer of formula (II)
H₂C=CH-(O)_{y}(C=O)_{z}-R² (II)
wherein
y = z = 0; and
R² is an organyl group.

16. Method of manufacturing a copolymer as defined in claim 15, **characterized in that** the method comprises polymerizing a monomer mixture comprising one or more monomers from the class of butenolides, with one or more vinyl functional monomers as defined in claim 15, by radical polymerization in the presence of a radical initiator, at a temperature in the range of ≥ 100 °C and ≤ 180 °C.
